# FASCICULE DE BREVET EUROPEEN

(11) **EP 1 882 825 B1**
(45) Date de publication et mention de la délivrance du brevet: **10.08.2011**
(21) Numéro de dépôt: 07290766.0
(22) Date de dépôt: 20.06.2007
(51) Int. Cl.: F01D 25/12, F01D 5/08, F01D 5/04

(54) **Système de refroidissement du rouet d'un compresseur centrifuge**
Kühlsystem des Rads eines Zentrifugalverdichters
System for cooling a centrifugal compressor impeller

(30) Priorité: 19.07.2006 FR 0606539
(43) Date de publication de la demande: 30.01.2008
(73) Titulaire: SNECMA, 75724 Paris Cedex 15 (FR)
(72) Inventeur: Brunet, Antoine Robert Alain, 77550 Moissy-Cramayel (FR); Leininger, Jean-Christophe, 91300 Massy (FR); Locatelli, David, 01170 Gex (FR); Lunel, Romain Nicolas, 77170 Brie Comte Robert (FR)
(74) Mandataire: Ramey, Daniel

(56) Documents cités:
- EP-A1- 0 961 033
- DE-A1- 19 845 375
- US-A- 4 462 204
- US-A- 5 555 721
- US-A1- 2001 047 651
- US-B1- 6 276 896

## Description

La présente invention concerne un système de refroidissement du rouet d'un compresseur centrifuge, en particulier dans une turbomachine telle qu'un turboréacteur ou un turbopropulseur d'avion.

De façon connue, le compresseur centrifuge d'une turbomachine est associé à un diffuseur annulaire de forme coudée dont l'entrée est radialement alignée avec la sortie du compresseur, et dont la sortie est orientée vers l'aval et située radialement à l'extérieur d'une chambre annulaire de combustion montée dans un espace annulaire délimité par un carter externe.

Le diffuseur comprend un flasque annulaire qui s'étend en aval et le long du rotor, aussi appelé rouet, du compresseur et qui est relié en aval à des composants structuraux de support de la chambre de combustion, notamment à des moyens d'injection d'air de refroidissement et/ou de ventilation d'une turbine située en aval de la chambre de combustion. Le flasque du diffuseur délimite avec le rouet du compresseur un passage annulaire radial d'écoulement d'air prélevé en sortie du compresseur (voir par exemple les documents US-A-5 555 721 et DE-A-19845375).

Cet air est soumis à un cisaillement visqueux important entre le rouet et le flasque du diffuseur, ce qui génère une quantité importante de chaleur absorbée en grande partie par le rouet du compresseur et se traduit par une augmentation importante de la température du rouet et un risque de dégradation du rouet et de diminution de sa durée de vie.

Une solution à ce problème consiste à fixer un bouclier annulaire de protection thermique sur le rouet du compresseur, ce bouclier délimitant avec le rouet une cavité annulaire d'air destinée à protéger le rouet de la chaleur de l'air prélevé en sortie du compresseur. Cependant, cette solution n'est pas satisfaisante car le bouclier est lourd et augmente la masse de la turbomachine et l'inertie du rouet du compresseur.

L'invention a notamment pour but d'apporter une solution simple, efficace et économique à ces problèmes de la technique antérieure.

Elle propose à cet effet un système de refroidissement du rouet d'un compresseur centrifuge, en particulier dans une turbomachine, ce compresseur alimentant un diffuseur annulaire porté par un carter externe et comportant un flasque annulaire qui s'étend en aval et le long du rouet du compresseur centrifuge et qui est relié en aval à des composants structuraux de support de la chambre de combustion de la turbomachine, caractérisé en ce que le flasque du diffuseur est recouvert du côté amont par une tôle annulaire fixée sur ce flasque et qui délimite, avec le rouet du compresseur, un premier passage annulaire d'écoulement d'air prélevé en sortie du compresseur et, avec le flasque du diffuseur, un second passage annulaire d'écoulement d'une partie du débit d'air sortant du diffuseur.

La chaleur générée par le cisaillement de l'air qui s'écoule dans le premier passage annulaire est absorbée en majeure partie par convection par l'air sortant du diffuseur et s'écoulant dans le second passage annulaire délimité par la tôle annulaire et le flasque du diffuseur. L'invention permet ainsi de limiter la quantité de chaleur absorbée par le rouet du dernier étage du compresseur et d'augmenter ainsi sa durée de vie.

Dans un mode préféré de réalisation de l'invention, des ailettes radiales s'étendent entre la tôle annulaire et le flasque du diffuseur et sont régulièrement réparties autour de l'axe de la turbomachine. Ces ailettes rigidifient le flasque du diffuseur qui peut ainsi assurer la transmission d'efforts sans se déformer.

Les ailettes comprennent avantageusement des ailettes amont qui s'étendent entre des parties radiales de la tôle annulaire et du flasque du diffuseur et des ailettes aval qui s'étendent entre des parties cylindriques de la tôle annulaire et du flasque du diffuseur. Les ailettes amont peuvent être au nombre de 36 environ, de même que les ailettes aval.

Ces ailettes sont avantageusement formées d'une seule pièce avec le flasque du diffuseur et sont fixées sur la tôle annulaire, par exemple par soudure ou brasure. Les extrémités des ailettes solidaires du flasque peuvent être engagées et retenues dans des fentes ou des rainures de forme correspondante de la tôle annulaire.

La tôle annulaire est située en amont et à l'intérieur du flasque du diffuseur, par rapport au sens de l'écoulement de l'air dans le second passage annulaire, et est fixée par soudure sur le flasque du diffuseur. Typiquement, la tôle annulaire a une épaisseur comprise entre 0,8 et 1,5mm environ.

Le flasque du diffuseur comprend avantageusement à son extrémité amont une rangée annulaire d'orifices d'entrée d'air provenant du diffuseur, ces orifices étant orientés sensiblement radialement et débouchant à leurs extrémités radialement internes dans le second passage annulaire. Ce flasque peut être fixé ou centré à son extrémité aval aux moyens d'injection d'air de refroidissement de la turbine, la sortie du second passage annulaire communicant avec l'entrée de ces moyens d'injection.

L'invention concerne encore une turbomachine, telle qu'un turboréacteur ou un turbopropulseur d'avion, caractérisée en ce qu'elle comprend un système de refroidissement du rouet d'un compresseur centrifuge, tel que décrit ci-dessus.

L'invention sera mieux comprise et d'autres détails, caractéristiques et avantages de la présente invention apparaîtront à la lecture de la description suivante faite à titre d'exemple non limitatif et en référence aux dessins annexés, dans lesquels :
- la figure 1 est une demi-vue schématique partielle en coupe axiale d'un système de refroidissement du rouet d'un compresseur centrifuge selon l'invention ;
- la figure 2 est une vue schématique en perspective du diffuseur du système selon l'invention, vu de l'aval ;
- la figure 3 est une vue partielle, à plus grande échelle, en coupe selon la ligne III-III de la figure 1.

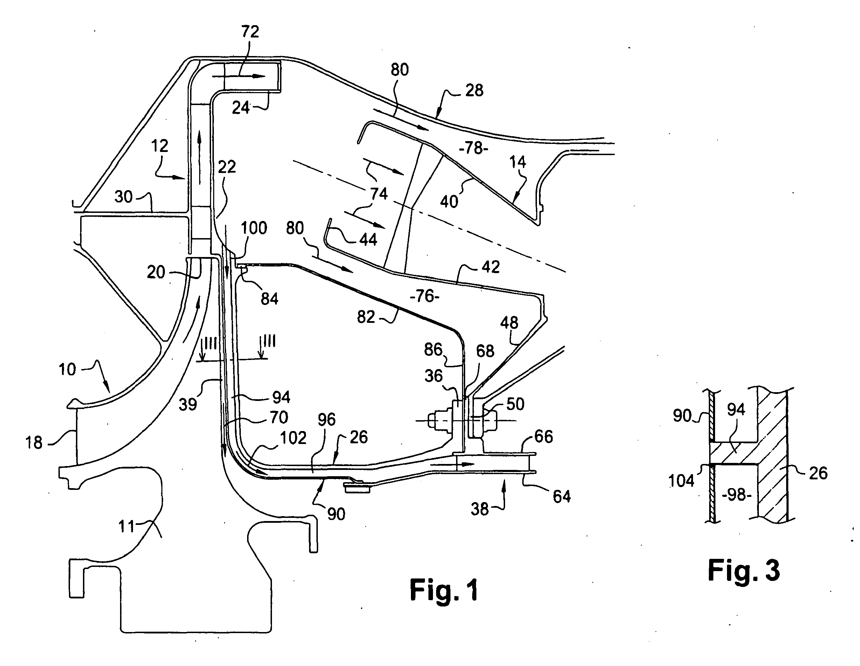

On se réfère d'abord à la figure 1 qui représente une partie d'une turbomachine, telle qu'un turboréacteur ou un turbopropulseur d'avion, comportant d'amont en aval, dans le sens de l'écoulement des gaz à l'intérieur de la turbomachine, un étage centrifuge de compresseur 10, un diffuseur 12 et une chambre de combustion 14.

L'entrée 18 de l'étage centrifuge 10 est orientée vers l'amont, sensiblement parallèlement à l'axe de la turbomachine, et sa sortie 20 est orientée vers l'extérieur, sensiblement perpendiculairement à l'axe de la turbomachine, et est alignée avec une entrée radiale 22 du diffuseur 12. Le diffuseur est de forme annulaire coudée à 90° et comprend une sortie annulaire 24 qui est orientée parallèlement à l'axe de la turbomachine et qui débouche à son extrémité aval radialement à l'extérieur de l'entrée de la chambre de combustion 14.

Le diffuseur 12 est supporté par un carter externe 28 de la turbomachine qui entoure extérieurement le compresseur 10, le diffuseur 12 et la chambre de combustion 14. Le diffuseur 12 comporte un voile amont 30 sensiblement cylindrique fixé par des moyens appropriés du type vis-écrou au carter externe 28.

Le diffuseur 12 comporte également un flasque 26 à section sensiblement en L ayant une partie amont qui s'étend sensiblement radialement vers l'intérieur depuis l'entrée 22 du diffuseur 12 et qui est reliée à son extrémité radialement interne à une partie sensiblement cylindrique du flasque. Cette partie cylindrique du flasque 26 comporte à son extrémité aval une bride annulaire 36 de fixation sur des moyens 38 d'injection d'air de refroidissement de la turbine. La partie radiale du flasque 26 s'étend en aval du rotor ou rouet 11 de l'étage centrifuge du compresseur, le long et à faible distance de celui-ci pour former un passage annulaire radial 39 communiquant à son extrémité radialement externe avec la sortie 20 du compresseur.

La chambre de combustion 14 comporte deux parois de révolution coaxiales 40, 42 s'étendant l'une à l'intérieur de l'autre et reliées à leurs extrémités amont à une paroi 44 de fond de chambre, ces parois 40, 42 et 44 délimitant entre elles une enceinte annulaire dans laquelle du carburant est amené par des injecteurs (non représentés). La paroi radialement externe 40 de la chambre est fixée à son extrémité aval au carter externe 28, et la paroi radialement interne 42 de la chambre est reliée à son extrémité aval à une virole tronconique 48 qui comporte à son extrémité radialement interne une bride annulaire interne 50 de fixation sur les moyens d'injection 38 précités.

Les moyens 38 d'injection d'air de refroidissement comprennent deux parois cylindriques interne 64 et externe 66 qui sont montées l'une à l'intérieur de l'autre et définissent entre elles une veine annulaire qui débouche en amont radialement à l'intérieur du flasque 26 et en aval radialement à l'intérieur de la virole 48 de la chambre 14. La paroi externe 66 comprend un rebord annulaire externe 68 sur lequel sont appliquées les brides 36 et 50, et qui comprend des orifices de passage de moyens de fixation du type vis-écrou qui s'étendent parallèlement à l'axe de la turbomachine à travers des orifices correspondants des brides 36, 50.

Une petite partie du débit d'air sortant du compresseur centrifuge 10 est prélevé par le passage radial 39 défini par le rouet 11 du compresseur et le flasque 26. Cet air (flèche 70) est soumis en sortie du compresseur à un cisaillement visqueux important provoqué par la rotation du rouet 11 à proximité de la partie radiale du flasque, ce qui engendre de la chaleur et entraîne un échauffement du rouet qui a une tenue thermique limitée (par exemple à 500°C pour un rouet réalisé en titane).

L'air sortant du diffuseur 12 (flèche 72) alimente, pour partie, la chambre de combustion 14 (flèches 74), et pour partie, des veines annulaires interne 76 et externe 78 de contournement de la chambre de combustion 14 (flèches 80).

La veine externe 78 est formée entre le carter externe 28 et la paroi externe 40 de la chambre, et l'air qui passe dans cette veine est utilisé pour le refroidissement et/ou la ventilation de composants, non représentés, situés en aval de cette chambre.

La veine interne 76 est formée entre la paroi interne 42 de la chambre et une tôle annulaire de convection 82 qui est montée radialement entre la chambre de combustion 14 et le flasque 26, et l'air qui passe dans cette veine alimente des perçages de la chambre 14. La tôle 82 comprend à son extrémité amont un rebord cylindrique 84 qui est monté sur un rebord cylindrique correspondant prévu à l'extrémité radialement externe du flasque 26, et à son extrémité aval une bride annulaire interne 86 qui est serrée axialement entre la bride 36 du flasque et le rebord annulaire 68 des moyens d'injection 38.

Selon l'invention, une tôle annulaire est intercalée axialement entre le rouet 11 du compresseur et le flasque 26 du diffuseur pour former, avec le rouet 11, le passage radial 39 précité et, avec le flasque 26, un second passage annulaire d'écoulement d'une partie du débit d'air sortant du diffuseur 12 pour ventiler la tôle annulaire et absorber la chaleur générée par le cisaillement de l'air dans le premier passage 39.

Dans l'exemple représenté, la tôle annulaire 90 a une section sensiblement en L et s'étend coaxialement au flasque 26 du diffuseur, en amont et à l'intérieur de celui-ci, pour délimiter un passage annulaire 98 coudé à angle droit, la tôle 90 étant rendue solidaire du flasque 26 par des ailettes radiales 94, 96 qui s'étendent dans le passage annulaire 98 entre la tôle et le flasque.

La tôle annulaire 90 comprend une partie amont radiale qui s'étend entre le rouet 11 du compresseur et le flasque du diffuseur, sensiblement parallèlement et à faible distance de ceux-ci, et qui est reliée à son extrémité radialement externe au diffuseur 12, et une partie sensiblement cylindrique qui est en appui radial étanche à son extrémité aval sur l'extrémité amont de la paroi interne 64 des moyens 38 d'injection d'air.

Des ailettes radiales amont 94 relient les parties radiales du flasque 26 et de la tôle 90, sur une majeure partie de leur dimension radiale, et des ailettes radiales aval 96 relient les parties cylindriques en regard du flasque 26 et de la tôle 90. Ces ailettes 94, 96 permettent de rigidifier le flasque du diffuseur qui assure la transmission d'efforts entre le diffuseur 12 et la chambre de combustion 14. Les ailettes 94 sont au nombre de 36 environ, par exemple, comme les ailettes 96, et sont régulièrement réparties autour de l'axe de la turbomachine.

La flasque 26 du diffuseur comporte à son extrémité radialement externe des orifices radiaux traversants 100 régulièrement répartis autour de l'axe de la turbomachine. Ces orifices 100 assurent une communication fluidique entre l'enceinte annulaire délimitée par le carter externe 28 et dans laquelle débouche la sortie du diffuseur 12, et le passage annulaire 98 formé entre le flasque 26 et la tôle annulaire 90. Le débit d'alimentation en air du passage 98 est défini par la section totale des orifices 100, cet air s'écoulant dans le passage 98 et pénétrant ensuite dans les moyens d'injection 38 (flèche 102).

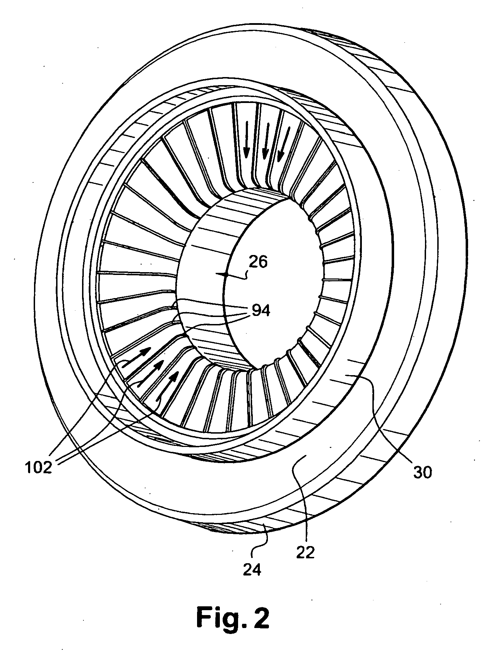

Le flasque 26 du diffuseur est, comme représenté aux figures 1 à 3, formé d'une seule pièce avec le diffuseur 12 et avec les ailettes 94, 96, et la tôle annulaire 90 est rapportée et fixée sur les ailettes et le flasque 26. L'extrémité radialement externe de la tôle 90 est fixée par soudure sur l'extrémité radialement externe du flasque 26, en amont des orifices 100 d'entrée d'air. Les extrémités libres des ailettes 94, 96 opposées au flasque 26 peuvent être engagées et retenues, par exemple par soudure ou brasure, dans des rainures ou des fentes radiales 104 de forme correspondante formées sur la tôle annulaire 90 (figure 3).

Typiquement, la tôle annulaire 90 a une épaisseur comprise entre 0,8 et 1,5mm environ, inférieure à celle du flasque 26 du diffuseur.

En variante, les ailettes 94, 96 pourraient être réalisées séparément du flasque 26 et de la tôle 90 et fixées par des moyens appropriés à leurs extrémités sur le flasque 26 et la tôle 90, respectivement.

## Revendications

1. Système de refroidissement du rouet d'un compresseur centrifuge,
en particulier dans une turbomachine, le système de refroidissement comprenant un compresseur centrifuge (10) et un diffuseur annulaire (12) comportant un flasque annulaire (26), le compresseur centrifuge (10) alimentant le diffuseur annulaire (12) porté par un carter externe (28) et comportant le flasque annulaire (26) qui s'étend en aval et le long du rouet (11) du compresseur centrifuge et qui est relié en aval à des composants structuraux de support de la chambre de combustion (14) de la turbomachine, **caractérisé en ce que** le flasque annulaire (26) du diffuseur est recouvert du côté amont par une tôle annulaire (90) fixée sur ce flasque et qui délimite, avec le rouet du compresseur, un premier passage annulaire (39) d'écoulement d'air prélevé en sortie du compresseur et, avec le flasque annulaire (26) du diffuseur, un second passage annulaire (98) d'écoulement d'une partie du débit d'air sortant du diffuseur.

2. Système selon la revendication 1, **caractérisé en ce que** des ailettes radiales (94, 96) sont agencées entre le flasque (26) du diffuseur et la tôle annulaire (90) et sont régulièrement réparties autour de l'axe de la turbomachine.

3. Système selon la revendication 2, **caractérisé en ce que** les ailettes comprennent des ailettes amont (94) s'étendant entre des parties radiales de la tôle annulaire et du flasque du diffuseur et des ailettes aval (96) s'étendant entre des parties cylindriques de la tôle annulaire et du flasque du diffuseur.

4. Système selon la revendication 3, **caractérisé en ce que** les ailettes amont et aval (94, 96) sont chacune au nombre de 36 environ.

5. Système selon l'une des revendications 2 à 4, **caractérisé en ce que** les ailettes (94, 96) sont formées d'une seule pièce avec le flasque (26) du diffuseur et sont fixées par soudure ou brasure sur la tôle annulaire (90).

6. Système selon la revendication 5, **caractérisé en ce que** les extrémités des ailettes (94, 96) solidaires du flasque du diffuseur sont engagées dans des fentes ou rainures (104) de la tôle annulaire.

7. Système selon l'une des revendications précédentes; **caractérisé en ce que** la tôle annulaire (90) est fixée par soudure sur le flasque (26) du diffuseur.

8. Système selon l'une des revendications précédentes, **caractérisé en ce que** le flasque du diffuseur comprend à son extrémité amont une rangée annulaire d'orifices (100) d'entrée d'air provenant du diffuseur, ces orifices étant orientés sensiblement radialement et débouchant à leurs extrémités radialement internes dans le second passage annulaire (98).

9. Système selon l'une des revendications précédentes, **caractérisé en ce que** le flasque du diffuseur est fixé à son extrémité aval à des moyens (38) d'injection d'air de refroidissement de turbine, la sortie du second passage annulaire (98) communicant avec l'entrée de ces moyens d'injection.

10. Turbomachine, **caractérisée en ce qu'**elle comprend un système de refroidissement selon l'une des revendications précédentes.

## Claims

1. A system for cooling the impeller of a centrifugal compressor, in particular in a turbomachine, the system for cooling comprising a centrifugal compressor (10) and an annular diffuser (12) comprising an annular end-piece (26), the centrifugal compressor (10) supplying the annular diffuser (12) supported by an external casing (28) and comprising the annular end-piece (26) that extends downstream and along the impeller (11) of the centrifugal compressor and that is connected downstream to structural components for supporting the combustion chamber (14) of the turbomachine, wherein the annular end-piece (26) of the diffuser is covered on the upstream side by an annular metal sheet (90) that is attached to this end-piece and that delimits, with the impeller of the compressor, a first annular passageway (39) to carry away the air taken from the outlet of the compressor and, with the annular end-piece (26) of the diffuser, a second annular passageway (98) to carry away a portion of the air flow coming out of the diffuser.

2. The system as claimed in claim 1, wherein radial fins (94,96) are arranged between the end-piece (26) of the diffuser and the annular metal sheet (90) and are evenly distributed about the axis of the turbomachine.

3. The system as claimed in claim 2, wherein the fins comprise upstream fins (94) extending between the radial portions of the annular metal sheet and of the end-piece of the diffuser and downstream fins (96) extending between the cylindrical portions of the annular metal sheet and of the end-piece of the diffuser.

4. The system as claimed in claim 3, wherein the upstream and downstream fins (94,96) are each approximately 36 in number.

5. The system as claimed in one of claims 2 to 4, wherein the fins (94,96) are formed in a single piece with the end-piece (26) of the diffuser and are attached by welding or brazing to the annular metal sheet (90).

6. The system as claimed in claim 5, **characterized in that** the ends of the fins (94,96) fixedly attached to the end-piece of the diffuser are engaged in slots or grooves (104) of the annular metal sheet.

7. The system as claimed in one of the preceding claims, wherein the annular metal sheet (90) is attached by welding to the end-piece (26) of the diffuser.

8. The system as claimed in one of the preceding claims, wherein the end-piece of the diffuser comprises, at its upstream end, an annular array of inlet orifices (100) for the air originating from the diffuser, these orifices being oriented substantially radially and opening at their radially internal ends into the second annular passageway (98).

9. The system as claimed in one of the preceding claims, wherein the end-piece of the diffuser is attached at its downstream end to means (38) for injecting turbine-cooling air, the outlet of the second annular passageway (98) communicating with the inlet of these injection means.

10. A turbomachine, which comprises a cooling system as claimed in one of the preceding claims.

## Patentansprüche

1. System zum Kühlen des Laufrades eines Zentrifugalverdichters, insbesondere in einer Turbomaschine, wobei das Kühlsystem einen Zentrifugalverdichter (10) und einen Ringdiffusor (12) mit einem ringförmigen Flansch (26) umfasst, wobei der Zentrifugalverdichter (10) den Ringdiffusor (12) beaufschlagt, der von einem Außengehäuse (28) getragen ist und den ringförmigen Flansch (26) umfasst, welcher sich stromabwärts und entlang des Laufrades (11) des Zentrifugalverdichters erstreckt und welcher stromabwärts mit Strukturkomponenten zum Tragen der Brennkammer (14) der Turbomaschine verbunden ist, **dadurch gekennzeichnet, dass** der ringförmige Flansch (26) des Diffusors auf der stromaufwärtigen Seite von einem ringförmigen Blech (90) bedeckt ist, das an diesem Flansch befestigt ist und das mit dem Laufrad des Verdichters einen ersten ringförmigen Strömungsdurchgang (39) für am Ausgang des Verdichters entnommene Luft und mit dem ringförmigen Flansch (26) des Diffusors einen zweiten ringförmigen Strömungsdurchgang (98) für einen Teil der aus dem Diffusor austretenden Luftmenge begrenzt.

2. System nach Anspruch 1, **dadurch gekennzeichnet, dass** Radialschaufeln (94, 96) zwischen dem Flansch (26) des Diffusors und dem ringförmigen Blech (90) angeordnet und um die Achse der Turbomaschine gleichmäßig verteilt sind.

3. System nach Anspruch 2, **dadurch gekennzeichnet, dass** die Schaufeln stromaufwärtige Schaufeln (94), die sich zwischen radialen Teilen des ringförmigen Blechs und des Flansches des Diffusors erstrecken, sowie stromabwärtige Schaufeln (96), die sich zwischen zylindrischen Teilen des ringförmigen Blechs und des Flansches des Diffusors erstrecken, umfassen.

4. System nach Anspruch 3, **dadurch gekennzeichnet, dass** die Anzahl der stromaufwärtigen und stromabwärtigen Schaufeln (94, 96) sich auf jeweils etwa 36 beläuft.

5. System nach einem der Ansprüche 2 bis 4, **dadurch gekennzeichnet, dass** die Schaufeln (94, 96) mit dem Flansch (26) des Diffusors aus einem einzigen Teil ausgebildet sind und an dem ringförmigen Blech (90) festgeschweißt oder festgelötet sind.

6. System nach Anspruch 5, **dadurch gekennzeichnet, dass** die Enden der Schaufeln (94, 96), die mit dem Flansch des Diffusors fest verbunden sind, in Schlitze oder Nuten (104) des ringförmigen Blechs eingesteckt sind.

7. System nach einem der vorstehenden Ansprüche, **dadurch gekennzeichnet, dass** das ringförmige Blech (90) an dem Flansch (26) des Diffusors festgeschweißt ist.

8. System nach einem der vorstehenden Ansprüche, **dadurch gekennzeichnet, dass** der Flansch des Diffusors an seinem stromaufwärtigen Ende eine ringförmige Reihe von Öffnungen (100) für den Eintritt von von dem Diffusor stammender Luft umfasst, wobei diese Öffnungen im Wesentlichen radial ausgerichtet sind und an ihren radial inneren Enden in den zweiten ringförmigen Durchgang (98) münden.

9. System nach einem der vorstehenden Ansprüche, **dadurch gekennzeichnet, dass** der Flansch des Diffusors an seinem stromabwärtigen Ende an Mitteln (38) zum Einspritzen von Luft zum Kühlen einer Turbine befestigt ist, wobei der Auslass des zweiten ringförmigen Durchgangs (98) mit dem Einlass dieser Einspritzmittel in Verbindung steht.

10. Turbomaschine, **dadurch gekennzeichnet, dass** sie ein Kühlsystem nach einem der vorstehenden Ansprüche umfasst.
